# EUROPEAN PATENT APPLICATION

(11) **EP 3 757 935 A1**
(43) Date of publication of application: **30.12.2020**
(21) Application number: 18906789.5
(22) Date of filing: 23.02.2018
(51) Int. Cl.: G06Q 50/10, G06Q 20/14

(54) **DATA COLLECTION SYSTEM, DATA COLLECTION SERVER, DATA COLLECTION METHOD, AND PROGRAM**

(71) Applicant: Mitsubishi Electric Corporation, Tokyo 100-8310 (JP)
(72) Inventor: ITO Takahiro, Tokyo 100-8310 (JP)
(74) Representative: Studio Torta S.p.A.
(86) International application number: PCT/JP2018/006797
(87) International publication number: WO 2019/163106

(57) **Abstract**

A data collection server (200) determines, based on the data received from the data collection terminal (300), a collection schedule for collecting data from the data collection terminal (300). Then the data collection server (200) determines, based on the determined collection schedule, a fee plan to be signed-up for from among at least two contract plans that indicate fees charged in accordance with an amount of data communicated via the communication line (500). Then the data collection server (200) notifies, to the data collection terminal (300), the determined collection schedule and the determined contract plan. The data collection terminal (300) transmits the data collected from the facility device (100) to the data collection server (200) in accordance with the notified collection schedule and the notified contract plan.

## Description

### Technical Field

The present disclosure relates to a data collection system, a data collection server, a data collection method, and a program, for collection of data from a facility device.

### Background Art

A known system for collecting operation data of a facility device has a technique of adjusting, in accordance with content of an abnormality condition, content and granularity of data to be collected (see, for example, Patent Literature 1). In a case of use of a mobile communication line in a communication path between the facility device and a server for collecting data of the facility device in the system disclosed in Patent Literature 1, the upper limit of an amount of communication data is often set at the time of contracting for a mobile communication line. Thus as the amount of data to be collected changes, the amount of communication data may exceed the upper limit of a contract, or conversely a useable amount of communication data may be left over.

There is also a technique of changing communication lines in accordance with the past amount of communication data (see, for example, Patent Literature 2). An information processing device disclosed in Patent Literature 2 selects, in accordance with the past amount of communication data or the past communication time, a communication line with the lowest communication fee or the shortest communication time for each application.

### Citation List

### Patent Literature

Patent Literature 1: Unexamined Japanese Patent Application Kokai Publication No. 2012-198796
Patent Literature 2: Unexamined Japanese Patent Application Kokai Publication No. 2001-111718

### Summary of Invention

### Technical Problem

However, when the technique disclosed in Patent Literature 2 is used, signing of a contract with a communication line service operator for each of the communication lines is needed in the case of the selection of an appropriate communication line from among the communication lines in the system disclosed in Patent Literature 1. In this case, a charge may arise for an unused communication line.

The present disclosure is made for solving the above-mentioned difficulties, and thus an objective of the present disclosure is to provide a data collection system, a data collection server, a data collection method, and a program, that can, while suppressing an increase in communication fees, achieve collection of data using a more appropriate communication line corresponding to an amount of data to be collected.

### Solution to Problem

To achieve the above objective, a data collection system according to the present disclosure includes a data collection terminal configured to collect data from a facility device and a data collection server configured to be communicatively connectable via a communication line to the data collection terminal. The data collection server includes data reception means, contract information storage means, collection schedule determination means, contract plan determination means, and notification means. The data reception means receives the data from the data collection terminal by communication via the communication line. The contract information storage means stores at least two contract plans that indicate fees charged in accordance with an amount of data communicated via the communication line. The collection schedule determination means determines, based on the data received by the data reception means, a collection schedule for collecting the data from the data collection terminal. The contract plan determination means determines, based on the collection schedule determined by the collection schedule determination means, a contract plan to be signed-up for from among the at least two contract plans stored in the contract information storage means. The notification means notifies, to the data collection terminal, the collection schedule determined by the collection schedule determination means and the contract plan determined by the contract plan determination means. The data collection terminal includes data transmission means for transmitting, in accordance with the collection schedule and the contract plan notified by the notification means, the data collected from the facility device to the data collection server.

### Advantageous Effects of Invention

According to the present disclosure, the data collection server determines a collection schedule for collecting data of a facility device from a data collection terminal based on data of the facility device received from the data collection terminal. Then the data collection server determines a contract plan for the communication line based on the determined collection schedule. Accordingly, the present disclosure enables collection of data using a more appropriate communication line corresponding to the amount of data to be collected.

### Brief Description of Drawings

FIG. 1 is a drawing illustrating a configuration of a data collection system according to Embodiment 1;
FIG. 2 is a drawing illustrating a configuration of a data collection server according to Embodiment 1;
FIG. 3 is a drawing illustrating a configuration of a data collection terminal according to Embodiment 1;
FIG. 4 is a drawing illustrating an example of data stored in a contract information DB;
FIG. 5 is a flow chart illustrating data collection processing executed by the data collection server according to Embodiment 1;
FIG. 6 is a flow chart illustrating response processing executed by the data collection terminal according to Embodiment 1;
FIG. 7 is a flow chart illustrating contract plan change processing executed by the data collection terminal according to Embodiment 1;
FIG. 8 is a drawing illustrating a configuration of a data collection system according to Embodiment 2;
FIG. 9 is a drawing illustrating a configuration of a data collection server according to Embodiment 2; and
FIG. 10 is a flow chart illustrating data collection processing executed by the data collection server according to Embodiment 2.

### Description of Embodiments

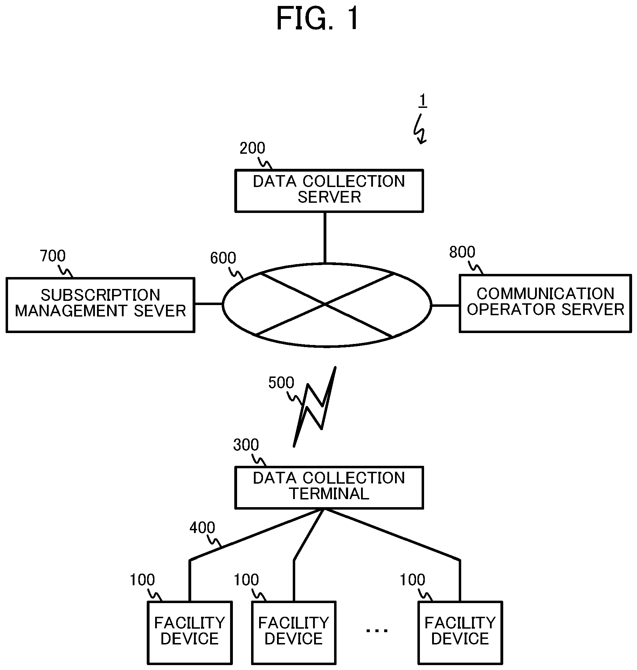

First, a data collection system 1 according to Embodiment 1 of the present disclosure is described with reference to FIG. 1. The data collection system 1 is a system for collecting data from facility devices 100, and includes the facility devices 100, a data collection server 200, and a data collection terminal 300.

The facility device 100 is an electrical device installed in a residence or a building and operates by consumption of electrical energy supplied from an unillustrated power line. The facility device 100 is communicatively connected via a communication line 400 to the data collection terminal 300.

Specific examples of the facility devices 100 include an air conditioner, an illumination device, an electrical cooker, a television, a refrigerator, ventilating equipment, a hot-water supply apparatus, and a floor heating apparatus. However, the facility devices 100 are not limited to the above examples, and may be any device that can operate with power supplied from a power line and communicate with the data collection terminal 300.

The data collection server 200 is a device that collects and stores data of the facility device 100. Specifically, the data collection server 200 collects, from the data collection terminal 300 in accordance with a collection schedule described later, data of the facility device 100 collected by the data collection terminal 300. Although FIG. 1 illustrates an example of the data collection server 200 collecting data from a single data collection terminal 300, the data collection server 200 may collect data of the facility device 100 from a plurality of data collection terminals 300.

The data collection terminal 300 is a device that collects data of the facility device 100 from the facility device 100 and transfers the data to the data collection server 200. The data collection terminal 300 is connected via a communication line 500 to the Internet 600. The data collection terminal 300 transmits, in accordance with the collection schedule described later, data of the facility device 100 via the communication line 500 to the data collection server 200 connected to the Internet 600.

In the present embodiment, a mobile communication line is used as the communication line 500. Thus for use of the communication line 500, a user of the data collection terminal 300 makes a contract with a communications service provider, such as a mobile network operator (MNO) or a mobile virtual network operator (MNO).

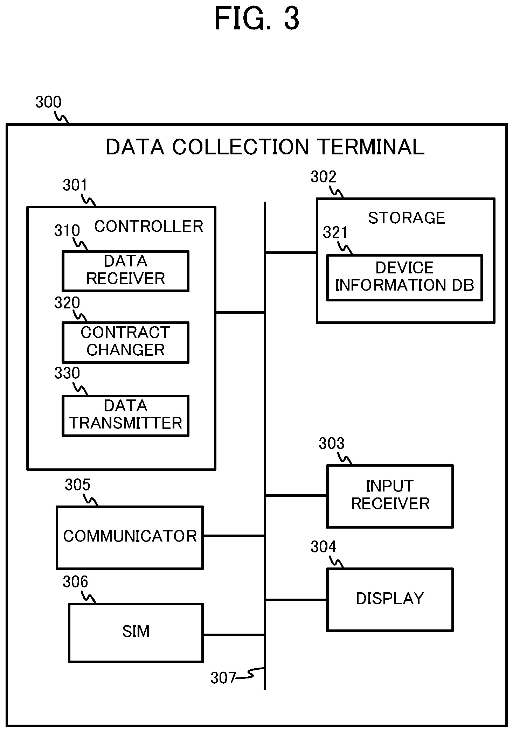

In the present embodiment, the data collection terminal 300 includes a subscriber identify module (SIM) 306 illustrated in FIG. 3. The SIM 306 stores identification information for authentication when the communication line 500 is used. The SIM 306 stores identification information, such as a telephone number and international mobile subscriber identity (IMSI), which is a 15-digit unique identification number. In the present embodiment, an embedded subscriber identity module (eSIM) that enables switching of communications service providers by remote operation is applied as the SIM 306. For a general SIM card, a user makes a contract with a communications service provider, and then provisioning processing in which identification information is written into the SIM card is performed with the SIM card set to a provisioning device connected to a system of the communications service provider. The user can start using a communication line by inserting the SIM card into a user's communication terminal. By contrast, the eSIM has a chip having SIM card capabilities mounted on a board of the communication terminal. Thus the eSIM is not envisaged as being, in the manner of the SIM card, removed from and inserted into the communication terminal. Thus a remote SIM provisioning (RSP), which is provisioning performed remotely via a mobile communication line, is performed with respect to the eSIM.

A subscription management server 700 is a server for remotely rewriting identification information stored in the SIM 306 of the data collection terminal 300. In the present embodiment, the subscription management server 700 remotely rewrites identification information stored in the SIM 306 of the data collection terminal 300 in response to a request from the data collection terminal 300.

A communications service provider server 800 is a server that provides a web site of the communications service provider that operates the communication line 500. In the present embodiment, the communications service provider server 800 executes, in response to a request from the data collection terminal 300, conclusion, cancellation, and alteration of contract relating to use of the communication line 500.

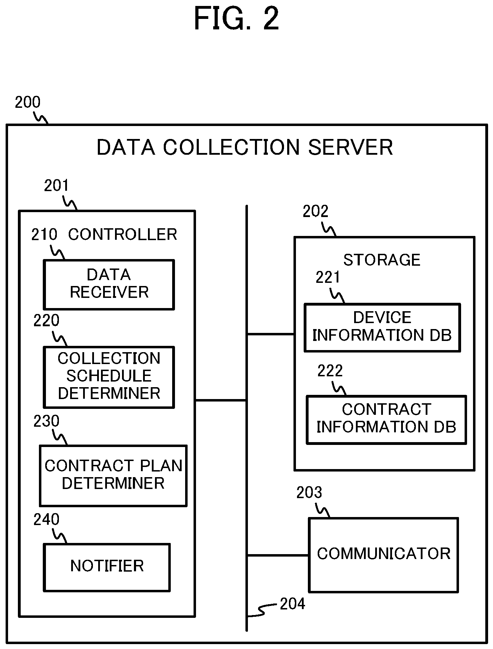

A hardware configuration of the data collection server 200 is described with reference to FIG. 2. As illustrated in FIG. 2, the data collection server 200 includes a controller 201, a storage 202, and a communicator 203. Components of the data collection server 200 are connected to one another via a bus 204.

The controller 201 includes a central processing unit (CPU), a read only memory (ROM), and a random access memory (RAM). The CPU is also referred to as a central processor, a central processing unit, a processor, a microprocessor, a microcomputer, or a digital signal processor (DSP). In the controller 201, the CPU reads a program and data stored in the ROM and uses the RAM as a working area for centralized control of the data collection server 200.

The storage 202 is a non-volatile semiconductor memory, such as a flash memory, an erasable programmable ROM (EPROM), and an electrically erasable programmable ROM (EEPROM), and performs the role of a secondary storage or an auxiliary storage. The storage 202 stores a program and data for various kinds of processing by the controller 201 and data generated or acquired through execution of the processing by the controller 201. In the present embodiment, the storage 202 stores a device information database (DB) 221 and a contract information DB 222 described later.

The communicator 203 includes a communication interface for communication with the data collection terminal 300. The communicator 203, under control of the controller 201, receives data from and transmits data to the data collection terminal 300.

Next, a hardware configuration of the data collection terminal 300 is described in detail. As illustrated in FIG. 3, the data collection terminal 300 includes a controller 301, a storage 302, an input receiver 303, a display 304, a communicator 305, and the SIM 306, and these components are connected to one another via a bus 307.

The controller 301 includes a CPU, a ROM, and a RAM. The CPU is also referred to as a central processor, a central processing unit, a processor, a microprocessor, a microcomputer, or a DSP. In the controller 301, the CPU reads a program and data stored in the ROM and use the RAM as a working area for centralized control of the data collection terminal 300.

The storage 302 is a non-volatile semiconductor memory, such as a flash memory, an EPROM, and an EEPROM, and performs the role of a secondary storage or an auxiliary storage. The storage 302 stores a program and data for various kinds of processing by the controller 301 and data generated or acquired through execution of the processing by the controller 301. In the present embodiment, the storage 302 stores a device information DB 321 described later.

The input receiver 303 is an input device, such as a touch panel, a touch pad, a switch, a pressing button, or the like. The input receiver 303 receives an operation from a user, and inputs to the controller 301 an operation signal indicating the received operation.

The display 304 is a display device, such as a liquid crystal display (LCD) panel, an organic EL, and a light emitting diode (LED). The display 304 displays an image based on a control signal from the controller 301. The input receiver 303 and the display 304 may be configured as a touch panel or a touch screen in which these components are laid on top of one another.

The communicator 305 includes a communication interface for communication with the facility device 100 and the data collection server 200. The communicator 305 receives and transmits data between the facility device 100 and the data collection server 200 under control of the controller 301.

The SIM 306 stores identification information for authentication during use of the communication line 500. In the present embodiment, as described above, the SIM 306 is an eSIM, and identification information stored in the SIM 306 is rewritten by the subscription management server 700. The SIM 306 functions as identification information storage means.

Next, a functional configuration of the controller 201 of the data collection server 200 is described with reference to FIG. 2. The controller 201 functions as a data receiver 210, a collection schedule determiner 220, a contract plan determiner 230, and a notifier 240. Each component is implemented by execution of a program recorded in the ROM by the CPU of the controller 201.

The data receiver 210 receives data of the facility device 100 from the data collection terminal 300 via the communication line 500. In the present embodiment, the data receiver 210 controls, in accordance with the collection schedule determined by the collection schedule determiner 220, the communicator 203 to acquire data of the facility device 100 from the data collection terminal 300 and records the data in the device information DB 221. The data receiver 210 functions as data reception means.

The device information DB 221 stores data of the facility device 100 acquired from the data collection terminal 300. The data of the facility device 100 includes, for example, operation data, setting data, and error data of the facility device 100 and a value detected by a sensor included in the facility device 100.

The collection schedule determiner 220 determines, based on the data acquired by the data receiver 210, a collection schedule for collecting data of the facility device 100 from the data collection terminal 300. In the present embodiment, the collection schedule determiner 220 first determines whether the data recorded in the device information DB 221 satisfies a schedule change condition that changes a collection schedule. The collection schedule determiner 220 determines that the schedule change condition is satisfied, for example, when a sign of a failure of the facility device 100 is included in the data of the facility device 100 recorded within a predetermined last period. Examples of the sign of the failure include frequent occurrence of errors and crossed threshold of the sensor value. The collection schedule determiner 220 determines that the schedule change condition is satisfied when the data of the facility device 100 indicates a stoppage of the facility device 100. Then when determination is made that the schedule change condition is satisfied, the collection schedule determiner 220 determines, based on the satisfied schedule change conditions, a collection schedule in a predetermined future collection period (for example, one month or one week). The collection schedule determiner 220 may determine a collection timing or a collection interval as the collection schedule. Specifically, when a sign of a failure of the facility device 100 is included in the data of the facility device that is most recently recorded, the collection schedule determiner 220 determines the collection schedule so that the collection interval of the data of the facility device 100 is shorter than the current collection interval. When the facility device stops, the collection schedule determiner 220 determines the collection schedule so that the collection interval of the data of the facility device 100 is longer than the current collection interval. When a determination is made that the schedule change condition is satisfied, the collection schedule determiner 220 may change, based on the satisfied schedule change condition, content of the data of the facility device 100 to be collected. In addition to the collection schedule for collection for the data collection server 200 to collect data from the data collection terminal 300, the collection schedule determiner 220 also determines the collection schedule for the data collection terminal 300 to collect data from the facility device 100. The collection schedule determiner 220 functions as collection schedule determination means.

The contract plan determiner 230 determines, based on the collection schedule determined by the collection schedule determiner 220, a contract plan to be signed-up for from among at least two contract plans stored in the contract information DB 222. In the present embodiment, the contract plan determiner 230 predicts an amount of data communication acquired when the data is collected following the collection schedule determined by the collection schedule determiner 220 in a predetermined collection period. Then the contract plan determiner 230 calculates, for each contract plan, a fee for communication of the predicted amount of data communication with reference to the contract information DB 222. Then the contract plan determiner 230 determines, as a contract plan to be signed-up for in the collection period, a contract plan of the lowest fee among the calculated fees. Then when the determined contract plan differs from the current contract plan, the contract plan determiner 230 determines a change of the contract plan. The contract plan determiner 230 functions as contract plan determination means.

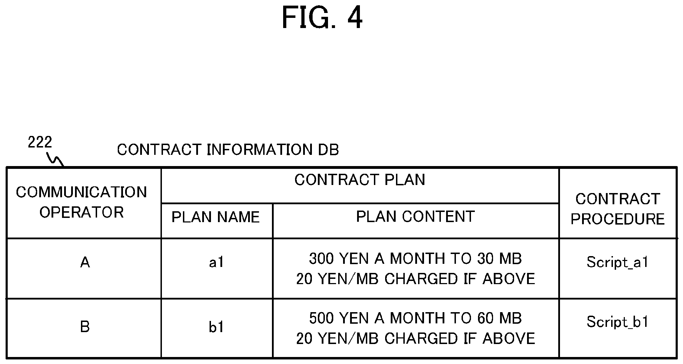

The contract information DB 222 stores at least two contract plans that indicate fees charged in accordance with amount of data communication communicated via the communication line 500. FIG. 4 illustrates an example of data stored in the contract information DB 222. The contract information DB 222 illustrated in FIG. 4 stores a communications service provider, a contract plan, and a contract procedure in association with one another. The communications service provider operates the communication line 500. The contract plan includes a plan name that is a name of a contract plan, and plan content that indicates a fee of the contract plan. The contract procedure is a script indicating a procedure for access to the communications service provider server 800 and for conclusion or cancellation of a contract of the contract plan with the communications service provider. In the example illustrated in FIG. 4, the contract plans recorded in the contract information DB 222 are two contract plans, that is, a contract plan having a plan name "a1" provided by a communications service provider "A" and a contract plan having a plan name "b1" provided by a communications service provider "B". In the contract information DB 222 illustrated in FIG. 4, a single contract plan per a single communications service provider is recorded, but when a single communications service provider provides multiple contract plans, multiple contract plans per a single communications service provider may be recorded. The contract information DB 222 functions as contract information storage means.

More specifically, an assumption is made here that when the amount of data communication per a month is 25 MB in a normal state, the collection schedule determiner 220 determines that the sign of the failure of the facility device 100 is included, and as a result of change of the collection schedule, the amount of data communication predicted based on the changed collection schedule is 50 MB. In this case, the contract plan determiner 230 calculates, based on the plan content with reference to the contract information DB 222, calculates a next month communication fee to be 700 yen for the contract plan with the plan name "a1" and to be 500 yen for the contract plan with the plan name "b1". When the contract plan currently under contract is "a1", the contract plan determiner 230 determines, as a contract plan to be used, the contract plan "b1" whose communication fee is lower.

The notifier 240 notifies, to the data collection terminal 300, the collection schedule determined by the collection schedule determiner 220 and the contract plan determined by the contract plan determiner 230. In the present embodiment, with reference to the contract information DB 222, the notifier 240 notifies, to the data collection terminal 300, the contract plan determined by the contract plan determiner 230 and the communications service provider and the contract procedure that are associated with the contract plan. The notifier 240 functions as notification means.

A functional configuration of the controller 301 of the data collection terminal 300 is described with reference to FIG. 3. The controller 301 functions as a data receiver 310, a contract changer 320, and a data transmitter 330.

The data receiver 310 controls the communicator 305 to receive data of the facility device 100 from the facility device 100. In the present embodiment, the data receiver 310 receives data from the facility device 100 in accordance with the collection schedule notified by the data collection server 200. Then the data receiver 310 records the received data in the device information DB 321 of the storage 302.

The contract changer 320 changes the contract with the communications service provider notified by the notifier 240 in accordance with the contract procedure notified by the notifier 240 of the data collection server 200. In the present embodiment, the contract changer 320 cancels the contract plan currently under contract and signs up for a contract plan to be signed-up for. In the present embodiment, the contract changer 320 accesses the communications service provider server 800 using a script notified by the notifier 240, and when the communications service provider server 800 publicly releases an application program interface (API) for conclusion and cancelation of the contract, the contract changer 320 uses the API to execute cancelation of the contract. When the communications service provider server 800 provides a service for conclusion and cancelation of the contract using a web browser, the contract changer 320 enters information necessary for a hypertext markup language (HTML) form while executing hypertext transfer protocol (HTTP) communication or hypertext transfer protocol secure (HTTPS) communication, and sends the information to the communications service provider server 800. Here, the information necessary for the conclusion or the cancelation of the contract, such as account information, contractor name, and credit card information, is recorded beforehand in the storage 302 of the data collection terminal 300.

When the communications service provider providing the contract plan currently under contract differs from the communications service provider providing the contract plan to be changed, the communications service provider needs to be changed. In such a case in which the change of the communications service provider is necessary, the contract changer 320 sends a request to the subscription management server 700 for remote rewriting of the identification information recorded in the SIM 306, that is, sends a request for provisioning. Then the contract changer 320 executes the provisioning in accordance with an instruction of the subscription management server 700. The contract changer 320 functions as contract change means.

The data transmitter 330 transmits to the data collection server 200 the data collected from the facility device 100, in accordance with the collection schedule and the contract plan notified by the notifier 240 of the data collection server 200. In the present embodiment, the data transmitter 330 transmits, to the data collection server 200 via the communication line 500, the data of the facility device 100 recorded in the device information DB 321 upon receiving a data transmission request of the collected data of the facility device 100 from the data collection server 200 in accordance with the provided collection schedule. The data transmitter 330 functions as data transmission means.

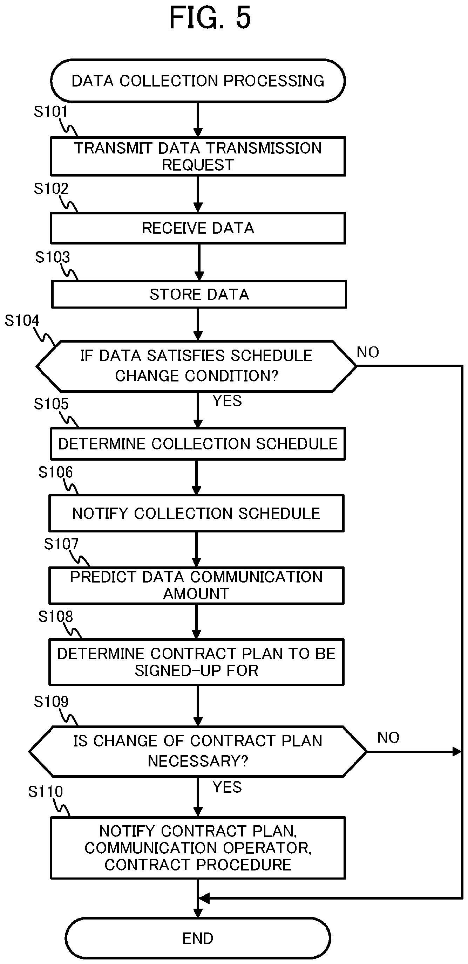

Next, data collection processing executed by the controller 201 of the data collection server 200 is described with reference to the flow chart illustrated in FIG. 5. The data collection processing starts when the current time reaches timing of collection of data of the facility device 100 from the data collection terminal 300 in the collection schedule currently under execution.

First, the controller 201 transmits a data transmission request for requesting transmission of data to the data collection terminal 300 (step S 101).

Next the controller 201 receives the data from the data collection terminal 300 (step S 102). Then the controller 201 stores the received data in the device information DB 221 (step S103).

Next, the controller 201 determines whether the data stored in the device information DB 221 satisfies the schedule change condition (step S104). The controller 201 completes the data collection processing when a determination is made that the data does not satisfies the schedule change condition (No in step S104).

When the controller 201 determines that the data satisfies the schedule change condition (Yes in step S104), the controller 201 determines a collection schedule based on the schedule change condition satisfied in step S 104 (step S 105). Then the controller 201 notifies, to the data collection terminal 300, the collection schedule determined in step S105 (step S106).

The controller 201 predicts an amount of data communication in a predetermined future collection period based on the collection schedule determined in step S 105 (step S 107). Then the controller 201 determines a contract plan to be signed-up for with reference to the contract information DB 222 based on the amount of data communication predicted in step S107 (step S108).

Then the controller 201 determines whether change of the contract plan currently under contract is necessary (step S 109). When the contract plan currently under contract matches the contract plan determined in step S108, the controller 201 determines that change of the contract plan currently under contract is not necessary. When the contract plan currently under contract does not match the contract plan determined in step S108, the controller 201 also determines that change of the contract plan is necessary.

Then the controller 201 completes the data collection processing when a determination is made that change of the contract plan currently under contract is not necessary (No in step S109). When the controller 201 determines that change of the contract plan currently under contract is necessary (Yes in step S109), the controller 201 notifies, to the data collection terminal 300, the contract plan determined in step S108, the communications service provider, and the contract procedure (step S110), and completes the data collection processing.

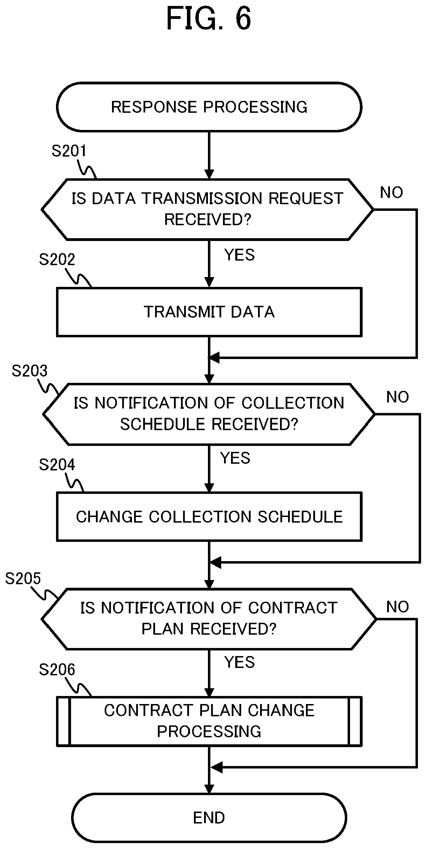

Next, response processing executed by the controller 301 of the data collection terminal 300 is described with reference to the flow chart illustrated in FIG. 6. The response processing starts when the communicator of the data collection terminal 300 receives the data transmission request or notification from the data collection server 200.

First, the controller 301 determines whether the data transmission request from the data collection server 200 is received (step S201). When the controller 301 determines that the data transmission request is received (Yes in step S201), the controller 301 transmits the data recorded in the device information DB 321 to the data collection server 200 (step S202).

When the controller 301 determines that the data transmission request is not received (No in step S201), the controller 301 determines whether notification of the collection schedule from the data collection server 200 is received (step S203). When the controller 301 determines that notification of the collection schedule is received (Yes in step S203), the controller 301 changes the current collection schedule to the collection schedule relating to the notification (step S204).

When the controller 301 determines that notification of the collection schedule is not received (No in step S203), the controller 301 determines whether notification of the contract plan is received from the data collection server 200 (step S205). Upon the controller 301 determining that notification of the contract plan is received (Yes in step S205), the controller 301 executes contract plan change processing (step S206).

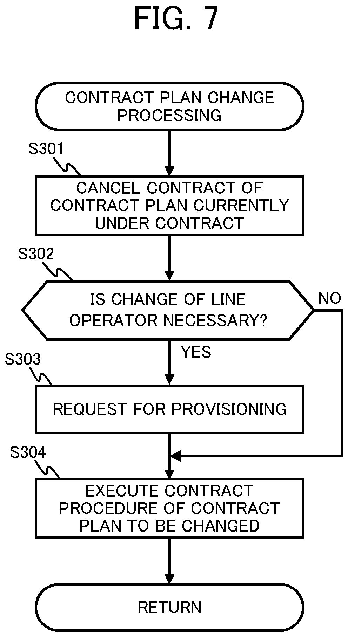

FIG. 7 illustrates an example of a flow chart of contract plan change processing executed by the controller 301 of the data collection terminal 300. As illustrated in FIG. 7, the controller 301 first accesses the communications service provider server 800 of the communications service provider who offers the contract plan currently under contract, and cancels the contract of the contract plan currently under contract (step S301).

Next, the controller 301 determines whether changing the communications service provider who offers the contract plan currently under contract is necessary (step S302). When the controller 301 determines that change of the communications service provider is not necessary (No in step S302), the process goes to step S304.

When the controller 301 determines that change of the communications service provider is necessary (Yes in step S302), the controller 301 makes a request to the subscription management server 700 for the provisioning (step S303).

Then the controller 301 accesses the communications service provider server 800 of the communications service provider who offers the contract plan to be signed-up for and executes a contract procedure of the contract plan (step S304), and completes the contract plan change processing and the response processing.

As described above, in the present embodiment, the data collection server 200 determines the collection schedule for collection of data from the data collection terminal 300 in accordance with the data of the facility device 100 collected by the data collection terminal 300. The data collection server 200 determines, based on the determined collection schedule, a contract plan to be signed-up for, and notifies the determined contract plan to the data collection terminal 300. This enables the data collection server 200 to collect data using an appropriate line in accordance with the amount of data to be collected.

### Embodiment 2

The above Embodiment 1 describes an example in which the data collection terminal 300 accesses the communications service provider server 800 in accordance with the contract plan notified by the data collection server 200, and executes signing up for and cancellation of the contract plan. However, the data collection server 200 may execute contracting about use of the communication line 500 between the data collection server 200 and the data collection terminal 300. In Embodiment 2 below, the data collection server 200a accesses the communications service provider server 800a and executes contracting of the contract plan. In the description of Embodiment 2 below, components similar to those in Embodiment 1 have reference signs similar to those in Embodiment 1, and the detailed description thereof is omitted.

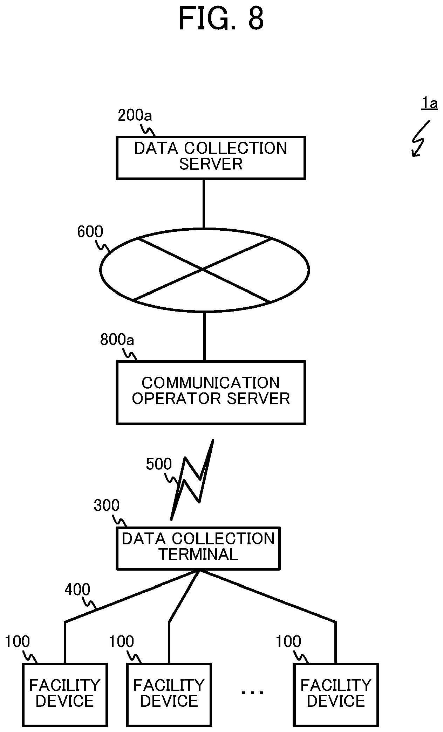

FIG. 8 illustrates a configuration of a data collection system 1a according to Embodiment 2. As illustrated in FIG. 8, in the data collection system 1a, a communications service provider server 800a is connected to a data collection terminal 300 via a communication line 500 that is a mobile communication line. The communications service provider server 800a is connected to a data collection server 200a via the Internet 600. In the present embodiment, information relating to subscribers of the mobile communication lines is managed by the communications service provider server 800a. As described later, the data collection server 200a accesses the communications service provider server 800a and executes sign-up, change, or cancellation of a contract plan. In the present embodiment, the communications service provider is assumed not to be changed, unlike to Embodiment 1.

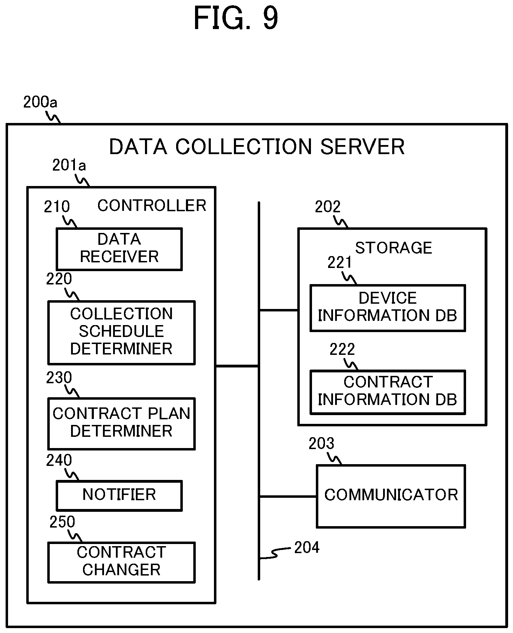

Next, a functional configuration of the controller 201a of the data collection server 200a is described with reference to FIG. 9. In comparison to the functional configuration of Embodiment 1 illustrated in FIG. 2, the controller 201a additionally functions as a contract changer 250.

The contract changer 250 changes a current contract plan to a contract plan determined by the contract plan determiner 230. In the present embodiment, the contract changer 250 accesses the communications service provider server 800a and executes a procedure for changing the contract plan, similarly to the contract changer 320 of the data collection terminal 300 of Embodiment 1. The communications service provider server 800a also updates information relating to the subscriber in accordance with the procedure for change of the contract plan. The contract changer 250 functions as contract change means.

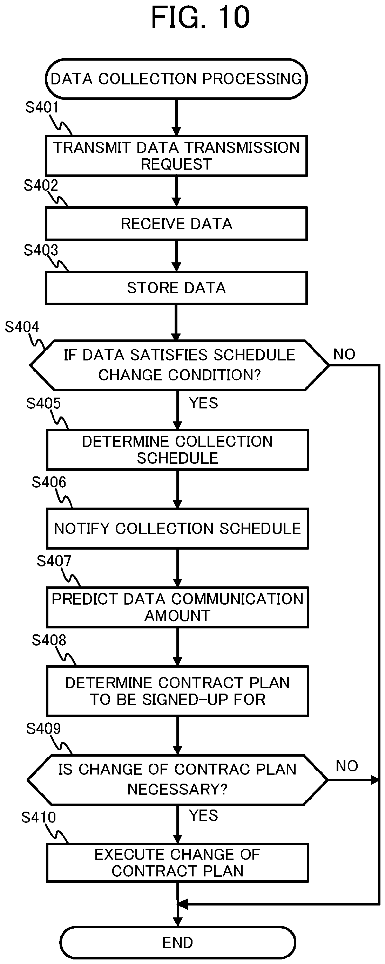

Next, data collection processing performed by the controller 201a of the data collection server 200a is described with reference to the flow chart illustrated in FIG. 10. The data collection processing starts when the current time reaches timing of collection of data from the data collection terminal 300 in the collection schedule currently under execution.

First, the controller 201a executes processing similar to steps S 101 to S 109 of the data collection processing according to Embodiment 1 illustrated in FIG. 5 in steps S401 to S409.

Then when the controller 201a determines that change of the contract plan currently under contract is necessary (Yes in step S409), the controller 201a accesses the communications service provider server 800a and executes change to the contract plan determined in step S408 (step S410). Then the controller 201a completes the data collection processing.

As described above, in the present embodiment, the data collection server 200a can access the communications service provider server 800a and execute change of the contract plan when the data collection terminal 300 is connected to the communications service provider server 800a via a mobile communication line and the communications service provider server 800a manages the subscriber of the mobile communication line. Thus the data collection server 200a can collect data by selecting an appropriate contract plan in accordance with the amount of data to be collected while suppressing an increase in communication fees.

Although the embodiments of the present disclosure are described above, modifications and applications according to various types of embodiments can be achieved.

Embodiments 1 and 2 above describe the examples in which the collection schedule determiner 220 of the data collection servers 200 and 200a determine collection schedules based on the collected data of the facility device 100. However, the collection schedule determiner 220 may further determine a collection schedule based on another factor. Specifically, the collection schedule determiner 220 may further determine the collection schedule based on a calendar. More specifically, when the facility device 100 is an air conditioner and a non-operating period of the air conditioner such as a spring or autumn season is determined, the collection schedule determiner 220 may determine the collection schedule to stop collecting data in the period.

Additionally, applying an operation program that defines operations of the data collection servers 200 and 200a and the data collection terminal 300 to an existing personal computer or an information terminal device enables such a personal computer or the like to function as the data collection servers 200 and 200a and the data collection terminal 300 according to the present disclosure.

Any distribution method for such a program can be used. For example, the program may be distributed in the form of a computer-readable recording medium storing the program, such as a compact disc read-only memory (CD-ROM), a digital versatile disk (DVD), a memory card, and the like, or may be distributed via a communication network such as the Internet.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure can be applied to a data collection system for collecting data of a facility device.

### Reference Signs List

- 1, 1a: Data collection system
- 100: Facility device
- 200, 200a: Data collection server
- 201, 201a: Controller
- 202: Storage
- 203: Communicator
- 204: Bus
- 210: Data receiver
- 220: Collection schedule determiner
- 230: Contract plan determiner
- 240: Notifier
- 250: Contract changer
- 221: Device information DB
- 222: Contract information DB
- 300: Data collection terminal
- 301: Controller
- 302: Storage
- 303: Input receiver
- 304: Display
- 305: Communicator
- 306: SIM
- 307: Bus
- 310: Data receiver
- 320: Contract changer
- 330: Data transmitter
- 321: Device information DB
- 400: Communication line
- 500: Communication line
- 600: Internet
- 700: Subscription management server
- 800, 800a: Communication operator server

## Claims

1. A data collection system, comprising:
a data collection terminal configured to collect data from a facility device; and
a data collection server configured to be communicatively connectable via a communication line to the data collection terminal,
the data collection server comprising
data reception means for receiving the data from the data collection terminal by communication via the communication line,
contract information storage means for storing at least two contract plans that indicate fees charged in accordance with an amount of data communicated via the communication line,
collection schedule determination means for determining, based on the data received by the data reception means, a collection schedule for collecting the data from the data collection terminal,
contract plan determination means for determining, based on the collection schedule determined by the collection schedule determination means, a contract plan to be signed-up for from among the at least two contract plans stored in the contract information storage means, and
notification means for notifying, to the data collection terminal, the collection schedule determined by the collection schedule determination means and the contract plan determined by the contract plan determination means,
the data collection terminal comprising
data transmission means for transmitting, in accordance with the collection schedule and the contract plan notified by the notification means, the data collected from the facility device to the data collection server.

2. The data collection system according to claim 1, wherein
the contract information storage means further stores, in association with each of the at least two contract plans, a contract procedure and a communications service provider who operates the communication line,
the notification means notifies, to the data collection terminal, the communications service provider and the contract procedure that are associated with the contract plan determined by the contract plan determination means, and
the data collection terminal further comprises contract change means for changing, in accordance with the contract procedure notified by the notification means, the contract plan to a contract plan notified by the notification means, the contract plan being with the communications service provider notified by the notification means.

3. The data collection system according to claim 2, wherein the contract change means further executes, in accordance with the contract procedure notified by the notification means, conclusion or cancelation of a contract with the communications service provider notified by the notification means.

4. The data collection system according to claim 2 or 3, wherein
the data collection terminal connects to the data collection server via a mobile communication line as the communication line,
the data collection terminal further comprises identification information storage means for storing identification information for use in authentication during use of the mobile communication line, and
the identification information stored in the identification information storage means is rewritable by the contract change means.

5. The data collection system according to claim 1, wherein
the contract information storage means further stores, in association with each of the at least two contract plans, a contract procedure and a communications service provider who operates the communication line, and
the data collection server further comprises contract change means for changing, in accordance with the contract procedure associated with the contract plan determined by the contract plan determination means, the contract plan to the contract plan determined by the contract plan determination means, the contract plan being with the communications service provider determined by the contract plan determination means.

6. The data collection system according to any one of claims 1 to 5, wherein
the collection schedule determination means determines the collection schedule in a future first period based on the data received by the data reception means, and
the contract plan determination means predicts, based on the collection schedule determined by the collection schedule determination means, an amount of data of the data received by the data reception means in the first period, and determines the contract plan in the first period based on the predicted amount of data.

7. A data collection server communicatively connectable via a communication line to a data collection terminal for collection of data from a facility device, the data collection server comprising:
data reception means for receiving the data from the data collection terminal by communication via the communication line;
contract information storage means for storing at least two contract plans that indicate fees charged in accordance with an amount of data communicated via the communication line;
collection schedule determination means for determining, based on the data received by the data reception means, a collection schedule for collecting the data from the data collection terminal;
contract plan determination means for determining, based on the collection schedule determined by the collection schedule determination means, a contract plan to be signed-up for from among the at least two contract plans stored in the contract information storage means; and
notification means for notifying, to the data collection terminal, the collection schedule determined by the collection schedule determination means and the contract plan determined by the contract plan determination means.

8. A data collection method executed by a data collection server communicatively connectable via a communication line to a data collection terminal for collection of data from a facility device, the data collection method comprising:
receiving the data from the data collection terminal by communication via the communication line;
determining, based on the received data, a collection schedule for collecting the data from the data collection terminal;
determining, based on the determined collection schedule, a contract plan to be signed-up for from among at least two contract plans stored in contract information storage means for storing the at least two contract plans that indicate fees charged in accordance with an amount of data communicated via the communication line; and
notifying, to the data collection terminal, the determined collection schedule and the determined contract plan.

9. A program for causing a computer for control of a data collection server communicatively connectable via a communication line to a data collection terminal for collection of data from a facility device to execute processing comprising:
receiving the data from the data collection terminal by communication via the communication line;
determining, based on the received data, a collection schedule for collecting the data from the data collection terminal;
determining, based on the determined collection schedule, a contract plan to be signed-up for from among at least two contract plans stored in contract information storage means for storing the at least two contract plans that indicate fees charged in accordance with an amount of data communicated via the communication line; and
notifying, to the data collection terminal, the determined collection schedule and the determined contract plan.
